# EUROPÄISCHE PATENTSCHRIFT

(11) **EP 0 808 447 B1**
(45) Veröffentlichungstag und Bekanntmachung des Hinweises auf die Patenterteilung: **31.10.2001**
(21) Anmeldenummer: 96901734.2
(22) Anmeldetag: 18.01.1996
(51) Int. Cl.: G01C 5/00, G01C 15/00, G02B 7/28

(54) **VORRICHTUNG FÜR NIVELLIERZWECKE**
LEVELLING INSTRUMENT
NIVEAU

(30) Priorität: 08.02.1995 DE 19504039
(43) Veröffentlichungstag der Anmeldung: 26.11.1997
(73) Patentinhaber: Leica Geosystems AG, 9435 Heerbrugg (CH)
(72) Erfinder: GÄCHTER, Bernhard, CH-9436 Balgach (CH); BRAUNECKER, Bernhard, CH-9445 Rebstein (CH)
(74) Vertreter: Büchel, Kurt F., Dr.
(86) Internationale Anmeldenummer: EP9600197
(87) Internationale Veröffentlichungsnummer: WO9624820

(56) Entgegenhaltungen:
- EP-A- 0 276 589
- EP-A- 0 551 984
- DE-A- 3 424 806
- US-A- 4 404 594

## Beschreibung

Die Erfindung betrifft eine Vorrichtung für Nivellierzwecke mit einer Abbildungsoptik und einem ortsauflösenden optoelektronischen Detektor zur Bildaufnahme und mit einer Elektronik und einer Recheneinheit zur Steuerung des Detektors und zur Bildauswertung.

Vorrichtungen der genannten Art sind aus DE 34 24 806 C2 bekannt Das dort beschriebenes Nivelliergerät ermittelt die Entfernung und den Höhenunterschied zu entfernt aufgestellten Nivellierlatten. Somit dient es im geodätischen Vermessungswesen der Bestimmung von Höhenfixpunkten und der topografischen und kartografischen Vermessung. Es wird aber ebenso in der Bauvermessung, im Verkehrswegebau oder im Tunnel- und Bergbau eingesetzt.

Beim klassischen Nivelliergerät wird mit dessen Fernrohr der Zahlenwert auf einer Höhenskala der Nivellierlatte visuell durch das Bedienpersonal abgelesen. Der abgelesene Zahlenwert befindet sich genau auf der optischen Achse im Fadenkreuz des Femrohrs.

Mit dem Aufkommen von automatisierten Digital-Nivelliergeräten wurde erstmals eine elektronische Lattenablesung möglich. Dazu ist eine Nivellierlatte entwickelt worden, auf der ein Codemuster aus schwarzen und weißen Elementen aufgebracht ist. Gemäß DE 34 24 806 C2 wird der im Gesichtsfeld der Fernrohroptik des Digital-Nivelliergerätes liegende Teil des Codemusters auf einer ortsauflösenden optoelektronischen Detektorgruppe abgebildet. Hierbei wird nicht nur die auf der optischen Achse des Femrohrs sondern die im gesamten Gesichtsfeld des Femrohrs befindliche Information des Codemusters genutzt, um den Höhenwert zu ermitteln. Zudem liefert der Positionsgeber der Fokussiereinrichtung des Digital-Nivelliergerätes näherungsweise die Entfernung zur Nivellierlatte. Die genaue Entfernung wird durch die Auswerteprozedur des aufgenommenen Codemusters bestimmt.

Der Nivelliervorgang läuft folgendermaßen ab. Die Nivellierlatte wird mit dem Fernrohr des horizontierten Nivelliergeräts anvisiert und mit der Fokuseinrichtung manuell schärf gestellt. Der Positionsgeber der Fokuseinrichtung liefert den Abstand zur Nivellierlatte, aus dem sich zusammen mit der Brennweite des Fernrohrobjektivs der Abbildungsmaßstab errechnet. Dieser wird in das Codemuster eingerechnet, um einen Vergleich mit einem Referenzcodemuster durchführen zu können. Dieses befindet sich als Originalcodemuster der Nivellierlatte in einem elektronischen Speicher. Als Vergleichsverfahren wird eine Kreuzkorrelation durchgeführt, die eine bestmögliche Übereinstimmung des gemessenen Codemusterausschnitts mit einem entsprechenden Ausschnitt auf dem Referenzcodemuster ermittelt. Mit der gefundenen Übereinstimmung ist der anvisierte Ort auf der Nivellierlatte und somit die Höhe der Nivellierlatte bezüglich des Nivelliergeräts bekannt.

Der Ablauf des eigentlichen Nivellier-Meßvorgangs erfolgt zwar vollautomatisch, jedoch muß zuvor die Abbildungsoptik des Nivelliergeräts so eingestellt werden, daß die Nivellierlatte in der Zwischenbildebene des Fernrohrobjektivs scharf abgebildet wird. Zu diesem Zweck läßt sich eine Fokussierlinse längs der optischen Achse der Femrohroptik mechanisch verschieben. Die Fokussierlinse ist mit einem Fokussiertrieb fest verbunden. Der Fokussiertrieb wird manuell betätigt und dabei wird das Bild der Nivellierlatte durch das Femrohrokular beobachtet. Der Fokussiervorgang ist beendet, wenn das Bild der Nivellierlatte scharf erscheint.

In der EP 0 576 004 A1 wird ebenfalls ein elektronisches Nivelliergerät der genannten Art beschrieben. Als Abbildungsoptik wird ein Femrohr verwendet. Das Femrohr wird auf eine Nivellierlatte fokussiert, deren Entfernung und Höhe zum Nivelliergerät bestimmt werden soll. Auf der Nivellierlatte ist ein schwarzweißes Strichmuster aufgebracht. Das Objektiv des Fernrohrs nimmt den in seinem Gesichtsfeld befindlichen Teil des Strichmusters der Nivellierlatte auf und erzeugt davon ein Bild auf einem photoelektrischen Empfänger. Die elektrischen Signale des Empfängers werden in einem Signalprozessor direkt oder über eine Fouriertransformation ausgewertet. Dabei wird aus der Periode und aus der Phase des mit dem Femrohrobjektiv aufgenommenen und durch die photoelektrische Einrichtung ausgewerteten Strichmusters die Entfernung zwischen Nivelliergerät und Nivellierlatte und die Nivellierhöhe ermittelt.

Die Fokussierung des Femrohrs auf die Nivellierlatte erfolgt manuell. Dazu wird eine Fokussierlinse längs der optischen Achse des Fernrohrs so lange verschoben, bis das durch das Okular des Fernrohrs betrachtete Bild der Nivellieriatte scharf erscheint.

Bei einem anderen Ausführungsbeispiel ist die Fokussierlinse motorisiert, was eine automatisierte Fokussierung ermöglicht. Dabei wird die Fokussierlinse mit Hilfe einer Motorsteuerung schrittweise verfahren. Bei jedem Schritt nimmt der Detektor das Strichmuster der Nivellierlatte auf und der Signalprozessor bildet daraus die Fouriertransformierte. Die Höhe des der periodischen Struktur des Strichmusters entsprechenden Peaks der Fouriertransformierten ist ein Maß für die Fokussierung. Die maximale Peakhöhe dieser Fouriertransformierten bedeutet optimale Fokussierung. Deswegen wird die Fokussierlinse nach dem Durchfahren der maximalen Peakhöhe an diese Stelle gebracht.

Beide Digital-Nivelliersysteme nach DE 34 24 806 C2 und nach EP 0 576 004 A1 benötigen zur Fokussierung der Nivellierlatte bewegte optische und mechanische Bauteile. Solche mechanisch gegeneinander bewegten Bauteile müssen sorgfältig gefertigt und justiert werden. Dies bedeutet einen entsprechenden Herstetlungs- und Kostenaufwand.

Zudem ist für den Benutzer des Nivelliergeräts die manuelle Fokuseinstellung etwas umständlich, er muß durch das Okular des Femrohrs blicken und die Scharfeinstellung des Nivellierlattenbildes subjektiv einschätzen. Die motorisierte Version der Fokussierlinse nimmt dem Benutzer diese Arbeit zwar ab, wird jedoch durch einen höheren meßtechnischen Aufwand erkauft. So muß das Nivellierlattenbild vom Detektor aufgenommen und in einem Mikroprozessor mit Hilfe geeigneter Algorithmen verarbeitet werden. Das Rechenergebnis muß von einer elektronischen Motorsteuerung umgesetzt, der Elektromotor angetrieben und die Fokussierlinse an die entsprechende Position verfahren werden. Die Position muß durch einen Positionsgeber oder bei Verwendung eines Schrittmotors zumindest über die Zählschritte bekannt sein, um nach dem Durchfahren der optimalen Fokussierposition wieder an diese Stelle zurückfahren zu können. Außerdem erhöht sich die Ausfallwahrscheinlichkeit eines Geräts durch zusätzlichen Umfang an Software, an Elektronik und insbesondere Elektromechanik wegen der endlichen Lebensdauer des Elektromotors.
In der EP 0 551 948-A1 wird ein Strichcode-Erfassungsgerät beschrieben, das mehrere Linsen verschiedener Brennweite beinhaltet. Die Strichcode werden in unterschiedlicher Entfernung am Gerät vorbeigeführt und die Linsen erzeugen Bilder des Strichcodes auf einem Detektor. Jeder Linse ist eine Blende zugeordnet. Das Gerät besitzt nur einen Detektor und es wird zu jeder Zeit nur ein Strichcode auf dem Detektor abgebildet.
Deshalb liegt der Erfindung die Aufgabe zugrunde, eine Vorrichtung für Nivellierzwecke zu entwickeln, die eine in beliebigen Entfernungen aufgestellte Nivellierlatte ohne Nachfokussierung und ohne eine mechanische Verstellung scharf abbildet.

Diese Aufgabe wird erfindungsgemäß durch die im Patentanspruch 1 angegebene Vorrichtung gelöst.

Vorteilhafte Weiterbildungen und Verbesserungen der Erfendung sind durch die Merkmale der abhängigen Ansprüche gekennzeichnet.

Ein in bestimmter Entfernung befindliches Objekt wird von einem Fernrohr bei Scharfeinstellung in dessen konjugierten Zwischenbildebenen abgebildet. Jeder Punkt des Objekts wird punktförmig abgebildet. Die Punkte anderer Objekte, die zum Fernrohrmäher oder weiter entfernt liegen, ergeben in den Zwischenbildebenen des Femrohrs Unschärfekreise. Deren Durchmesser fallen um so größer aus, je weiter die Objekte von der scharf eingestellten Objektebene entfernt sind. Für den Fall, daß die Durchmesser der Unschärfekreise kleiner als der Abstand der lichtempfindlichen Strukturen eines in einer Zwischenbildebene angeordneten ortsauflösenden Detektors bleiben, registriert der Detektor die Flächen der Unschärfekreise als Punkte. Unter dieser Bedingung des maximal zulässigen Durchmessers der Unschärfekreise ergibt sich aus der Abbildungsgleichung ein bestimmter Entfernungsbereich, den der Detektor scharf abbildet. Dieser als Schärfentiefe bezeichnete Entfemungsbereich ist um so größer, je größer die Abstände der lichtempfindlichen Elemente des Detektors sind, also je schlechter dessen Auflösungsvermögen ist.

Als ortsempfindliche optoelektronische Detektoren werden für die digitalen Nivelliergeräte üblicherweise lineare Diodenzeilen oder zweidimensional ortsempfindliche CCD-Arrays eingesetzt. Sie empfangen das Bild der Nivellierlatte über einen im Strahlengang des Fernrohrs angeordneten Strahlteiler. Dieser ermöglicht aufgrund der Strahlaufteilung die gleichzeitige Beobachtung der Nivellierlatte über das Femrohrokular. Bei der Beobachtung der Nivellieriatte durch das Femrohrokular dient die Netzhaut des Beobachters mit ihren diskreten lichtempfindlichen Elementen als ortsempfindlicher Detektor. Somit trägt das Auflösungsvermögen des Auges zu dem Schärfentiefebereich der vom Beobachter gesehenen Objekte bei.

Neben dem Auflösungsvermögen des Detektors gehen auch die Daten der verwendeten Optik in die Bestimmung des Schärfentiefebereichs ein. So ist allgemein bekannt, daß bei großer Blendenzahl auch der Schärfentiefebereich groß ist. Es gehen also auch die Größe der Öffnungsblende, die Brennweite des Fernrohrobjektivs und auch die Entfernung zum Objekt selbst ein. Einen zusätzlichen Einfluß haben auch geometrische Objektivfehler und Beugungseffekte.

Somit wird insgesamt der Schärfentiefebereich eines elektronischen Nivelliergeräts durch das verwendete Objektiv und den verwendeten Detektor bestimmt. Befindet sich die Nivellierlatte in einer Entfernung außerhalb der augenblicklich eingestellten Entfernung einschließlich ihres dazugehörigen Schärfentiefebereichs, so muß nach der oben beschriebenen herkömmlichen Art mit Hilfe einer Fokussierlinse nachfokussiert und ein anderer Entfemungsbereich am Nivelliergerät eingestellt werden. Gemäß der vorliegenden Erfindung entfällt diese Einstellung und es entfallen alle damit verbundenen Einrichtungen. Die maximale (gegebenenfalls unendliche) Entfernung der Nivellierlatte wird in einzelne Entfemungsbereiche aufgeteilt, die erfindungsgemäß den Schärfentiefebereichen der unterschiedlich abbildenden Pupillenzonen der Abbildungsoptik zugeordnet sind. Eine solchermaßen gestaltete Abbildungsoptik empfängt mit jeder ihrer abbildenden Pupillenzonen das von der Nivellierlatte kommende Licht und erzeugt eine vollständige Abbildung der Nivellierlatte. Nur eine dieser abbildenden Pupillenzonen bildet die Nivellierlatte jedoch genügend scharf ab, um eine Auswertung zu ermöglichen. Die Nivellierlatte befindet sich dann gerade im Schärfentiefebereich dieser abbildenden Zone.

Die erfindungsgemäß unterschiedlich abbildenden Pupillenzonen der Abbildungsoptik, die den unterschiedlichen Entfemungsbereichen zugeordnet sind, lassen sich auf verschiedene Arten realisieren. Im einfachsten Fall werden einzelne Aperturen separat nebeneinander angeordnet. Sie können verschieden große Öffnungsflächen für den Lichteintritt und unterschiedlich große Brennweiten oder Bildweiten besitzen. Als abbildende Elemente werden refraktive und / oder diffraktive optische Elemente eingesetzt. Die einzelnen Aperturen können durch herkömmliche Objektive mit ausschließlich refraktiven Elementen dargestellt sein, deren unterschiedliche Brechkräfte entsprechende Brennweiten bedeuten. Diese sind so aufeinander abgestimmt, daß sie alle gewünschten Entfernungen zwischen Nivelliergerät und Nivellierlatte scharf abbilden. Jedes Objektiv fokussiert die Objekte (Nivellierlatte) seines Schärfentiefebereichs auf einen ihm zugehörigen, einzelnen ortsauflösenden Detektor oder über eine Strahlumlenkung auf einen ihm zugeordneten Teilbereich eines gemeinsamen ortsauflösenden Detektors. Um von weiter entfernten Objekten noch eine ausreichende Lichtmenge zu empfangen, werden die entsprechenden Objektive häufig mit einer größeren Öffnungsfläche ausgestattet.

Eine anders aufgebaute Version des Erfindungsgegenstandes beinhaltet einen erheblich kompakteren Aufbau mit nur einer einzigen Apertur, die selbst in einzelne, unterschiedlich abbildende Pupillenzonen aufgeteilt ist. Auch hier besitzt jede Pupillenzone eine andere Brennweite und / oder Bildweite. Diesen entsprechen nach der Abbildungsgleichung und unter Berücksichtigung der Unschärfekreise bestimmte Entfemungsbereiche, die scharf auf den zugeordneten Detektoren oder den zugeordneten Teilbereichen eines gemeinsamen Detektors abgebildet werden. Sind die Brennweiten der einzelnen Pupillenzonen gleich groß, so werden den Entfemungsbereichen entsprechend verschiedene Bildweiten gewählt und in den Bildebenen einzelne Detektoren angeordnet.

Die einzelnen Pupillenzonen der Apertur können zu einer Achse rotationssymmetrisch aufgebaut sein. Dies ist aber keine notwendige Bedingung und so können die Pupillenzonen auch beliebig große und beliebig geformte Öffnungsflächen für den Lichteintritt aufweisen. Die abbildenden Eigenschaften werden durch refraktive oder durch diffraktive optische Elemente oder auch durch eine Kombination beider Abbildungsarten realisiert.

Kleine Öffnungen bedeuten große Schärfentiefebereiche. Allerdings können dadurch Intensitätsprobleme auftreten. So kann aus radiometrischen Gründen eine aktive Beleuchtung der Nivellierlatte erforderlich werden. Die Beleuchtung erfolgt am besten mit einem Scheinwerfer. Der Beleuchtungsstrahlengang kann durch Einspiegelung über einen Strahlteiler und durch die abbildenden Pupillenzonen hindurchgeführt werden. Es ist auch möglich, einen Scheinwerfer unabhängig von den Aperturen im Nivelliergerät zu integrieren oder am Nivelliergerät zu befestigen. Als Strahlungsquelle kann beispielsweise eine im nahen Infraroten emittierende Leuchtdiode oder Laserdiode dienen. In diesem Wellenlängenbereich sind viele optoelektronische Detektoren besonders empfindlich.

Die unterschiedlich abbildenden Pupillenzonen einer Apertur oder eine Gruppe aus unterschiedlich abbildenden separat angeordneten Aperturen decken aufgrund ihrer Schärfentiefebereiche den gesamten relevanten Entfemungsbereich für ein elektronisches Nivelliergerät ab. Mathematisch betrachtet wird der große Schärfentiefebereich durch eine geeignete räumliche Gestaltung der optischen Pupillenfunktion erreicht, die sich aus der Verteilung der komplexen Wellenamplitude in der Austrittspupille ergibt. Die von dort kommenden Wellen werden von den ortsauflösenden Detektoren als Intensitätsverteilung aufgenommen, die in der nachgeschalteten Auswerteelektronik und mit Hilfe der Auswertesoftware verarbeitet wird. Die intelligente Auswertung der Detektorsignale erkennt die jeweils optimal abbildende Zone.

Aufgrund aller von der Abbildungsoptik simultan erfaßten Entfemungsbereiche ergeben sich eine Reihe von Vorteilen sowohl für die Herstellung des Nivelliergeräts als auch für den Nivelliervorgang selbst. So entfällt bei jeder Nivelliermessung der Arbeitsgang des vorherigen Fokussierens durch den Benutzer. Er muß nicht mehr durch ein Okular blicken und eine Scharfeinstellung vornehmen. Dadurch vereinfacht sich die Bedienung des elektronischen Nivelliergeräts.

Die Fokussierlinse und der Fokussiertrieb werden nicht mehr benötigt. Es erübrigt sich also deren Herstellung, Montage und Justierung, wodurch Kosten eingespart werden. Da zudem der Benutzer nicht mehr durch das Okular des Femrohrs blicken muß, erübrigt sich auch die Herstellung, Montage und Justierung des Femrohrokulars und des ihm zugeordneten Strahlteilers. Dieser Strahlteiler diente der Aufteilung des Strahlengangs im Femrohr zur Bilderzeugung sowohl auf dem optoelektronischen Detektor wie auch auf der Netzhaut des Beobachters. Das ungefähre Anzielen der Nivellierlatte kann mit erheblich einfacheren Mitteln wie beispielsweise einer Fluchtlinien-Markierung auf dem Nivelliergerät oder einem einfachen Hilfsfemrohr erfolgen.

Im Vergleich zu einem Nivelliergerät mit einer automatisierten Fokussierung durch eine motorisierte Fokussierlinse entfallen auch die Aufbauten für die Motorisierung und der Motor inklusive seiner elektronischen Ansteuerung. Bewegte mechanische und optische Bauelemente sind nicht mehr vorhanden. Das erfindungsgemäße Nivelliergerät ist mit einer festen geometrischen Anordnung der Abbildungsoptik und des Detektors oder mehrerer Detektoren einfach und robust aufgebaut.

Im folgenden werden Ausführungsbeispiele der Erfindung anhand der Zeichnung näher erläutert. Es zeigen:
- Fig.1: eine schematische Darstellung eines Nivelliergeräts mit einer Abbildungsoptik mit einzelnen Aperturen und mit einzelnen ihnen zugeordneten Detektoren,
- Fig.2: eine schematische Darstellung eines Nivelliergeräts mit einer Abbildungsoptik mit einzelnen Aperturen und mit einem gemeinsamen Detektor,
- Fig.3: eine schematische Darstellung eines Nivelliergeräts mit einer in Pupillenzonen aufgeteilten Apertur mit refraktiven optischen Elementen und einzelnen Detektoren,
- Fig.4: eine schematische Darstellung der Frontansicht des Nivelliergeräts aus Fig.3,
- Fig.5: eine schematische Darstellung eines Nivelliergeräts mit einer in Pupillenzonen aufgeteilten Apertur mit refraktiven optischen Elementen und mit einem diffraktiven Korrekturelement,
- Fig.6: eine schematische Darstellung eines Nivelliergeräts mit einem in Pupillenzonen aufgeteilten diffraktiven optischen Element als Abbildungsoptik,
- Fig.7: eine schematische Darstellung eines Nivelliergeräts mit einer in Pupillenzonen aufgeteilten Apertur und einem gemeinsamen Detektor.

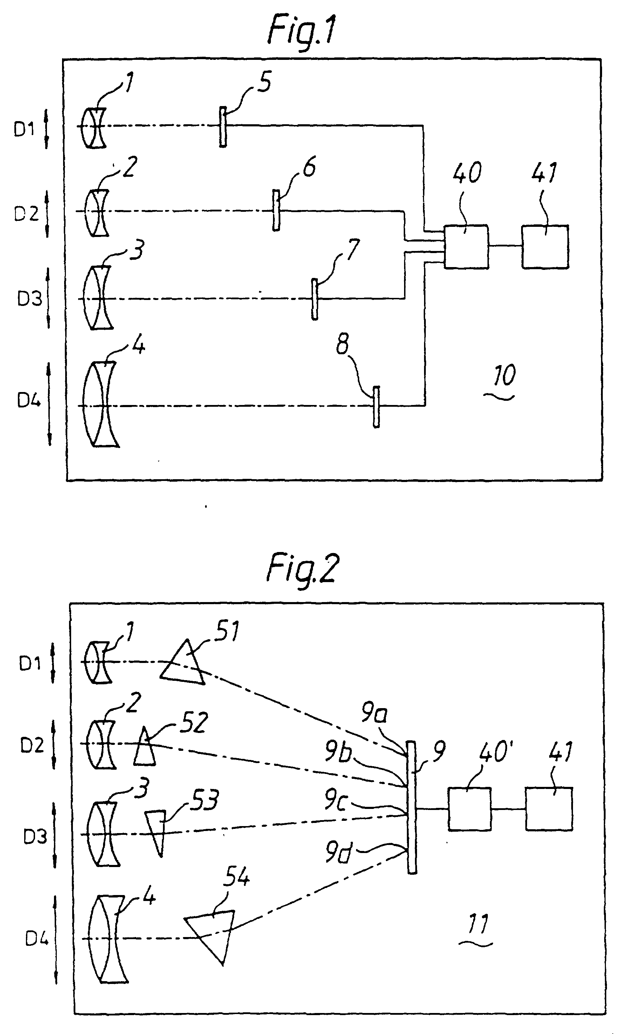

In Fig.1 sind als einzelne Aperturen die Objektive 1 bis 4 des Nivelliergeräts 10 schematisch dargestellt. Die Objektive 1 bis 4 besitzen verschieden große Öffnungsflächen mit den Durchmessern D1, D2, D3, D4 und unterschiedlich große, fest eingestellte Brennweiten, die durch unterschiedliche Dicken der Objektive angedeutet sind. Die ortsauflösenden optoelektronischen Detektoren 5 bis 8 sind in unterschiedlichen, fest eingestellten Entfernungen (Bildweiten) zu den jeweils zugehörigen Objektiven 1 bis 4 angeordnet Jedes Objektiv-Detektor Paar (1 und 5, 2 und 6, 3 und 7, 4 und 8) bildet Objekte in seinem Schärfentiefebereich ab. Die Schärfentiefebereiche sind dabei so aufeinander abgestimmt, daß sie einen zusammenhängenden Entfemungsbereich ergeben, der bis zu einer maximalen Entfernung vom Nivelliergerät 10 reicht. Die maximale Entfernung kann auch unendlich sein.

Eine innerhalb der maximalen Entfernung befindliche Nivellierlatte wird von demjenigen der Objektiv-Detektor Paare (1 und 5, 2 und 6, 3 und 7, 4 und 8) scharf abgebildet und aufgenommen, in dessen Schärfentiefebereich die augenblickliche Entfernung der Nivellierlatte fällt. Die Elektronik 40 steuert die Detektoren 5 bis 8 und empfängt und verarbeitet deren Signale. Die mit der Elektronik 40 verbundene Recheneinheit 41 führt die Steuer- und Auswertesoftware aus. Die Auswertung ermittelt die optimale Abbildung der Nivellierlatte. Das Bild der Nivellierlatte wird dann zur Bestimmung von Nivellierdaten weiterverarbeitet, wobei insbesondere ein offset der Achse des messenden Systems von einer Gerätebezugsachse und die Optimierung der Entfernung innerhalb des Schärfentiefebereichs mit berücksichtigt werden. Die Elektronik 40 und die Recheneinheit 41 sind im Nivelliergerät 10 integriert. Die Recheneinheit 41 kann auch außerhalb des Nivelliergeräts 10 untergebracht sein.

In Fig.2 ersetzen die Teilbereiche 9a bis 9d eines einzigen ortsauflösenden optoelektronischen Detektors 9 die einzelnen Detektoren 5 bis 8 der Fig.1. Die Elektronik 40' und die Software kennen die Zuordnung der Teilbereiche 9a bis 9d zu den Objektiven 1 bis 4. In den Strahlengängen zwischen den Objektiven 1 bis 4 und dem Detektor 9 sind Strahlumlenkelemente angeordnet, die beispielhaft als Prismen 51 bis 54 in Fig.2 dargestellt sind. Sie dienen der Strahlführung zwischen den einzelnen Objektiven 1 bis 4 und den Teilbereichen 9a bis 9d des Detektors 9. Die prinzipielle Funktionsweise des Nivelliergeräts 11 nach Fig.2 ist identisch mit der des Nivelliergeräts 10 in Fig.1 und ist unter Fig.1 beschrieben.

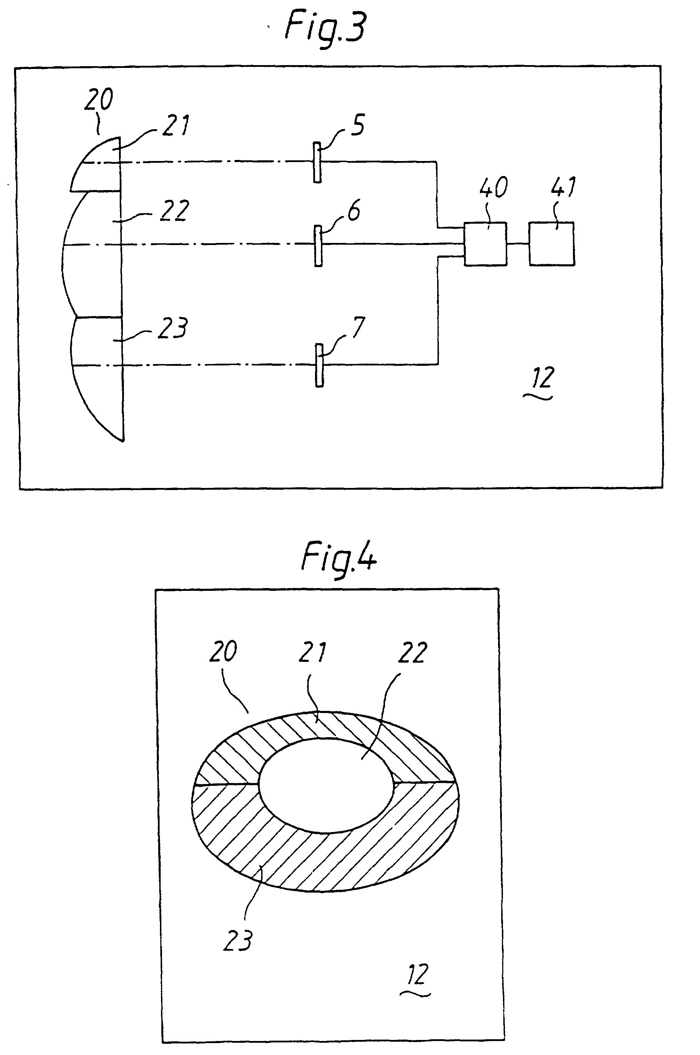

Einen anderen optischen Aufbau zeigt das Nivelliergerät 12 in Fig.3. Statt einzelner, separat angeordneter Aperturen sind unterschiedlich abbildende Pupillenzonen 21, 22 und 23 in einer Apertur 20 zusammengefaßt. Die Pupillenzonen 21, 22 und 23 bestehen aus refraktiven optischen Elementen unterschiedlicher Brechkraft und somit unterschiedlicher Brennweiten. Die Bildweiten sind in diesem Ausführungsbeispiel gleich groß gehalten und es werden den Pupillenzonen 21, 22 und 23 zugeordnete einzelne Detektoren 5, 6 und 7 verwendet. Die unterschiedlichen Schärfentiefebereiche der Pupillenzonen 21, 22 und 23 ergeben zusammen den möglichen Entfemungsbereich, innerhalb dessen eine Nivellierlatte auf einem der Detektoren scharf abgebildet wird. Wie in den vorhergehenden Figuren dienen die Elektronik 40 und die Recheneinheit 41 der Detektorsteuerung und der Bildauswertung.

Fig.4 zeigt eine Frontansicht des Nivelliergeräts 12 der Fig.3. Die Pupillenzonen 21, 22 und 23 besitzen für den Lichteintritt unterschiedlich große und unterschiedlich geformte Öffnungsflächen. Die Pupillenzone 23 fängt aufgrund ihrer größeren Öffnungsfläche auch eine größere Lichtmenge ein. Dadurch werden geringere Lichtintensitäten aufgrund einer in größeren Entfernungen aufgestellten Nivellierlatte zumindest zu einem Teil ausgeglichen. Deshalb sind Pupillenzonen mit größeren Öffnungsflächen für größere Entfemungsbereiche ausgelegt.

Um zugleich einen kompakten Aufbau der Abbildungsoptik 20 zu erhalten, grenzen die Öffnungsflächen der Pupillenzonen 21,22 und 23 möglichst optimal aneinander, wodurch sich unterschiedliche Formen ergeben. Über die in Fig.3 und Fig.4 dargestellten Pupillenzonen 21,22 und 23 hinausgehend können durch eine andere Aufteilung oder durch Erweiterung eine größere Anzahl von Öffnungsflächen erzeugt werden. Diesen wiederum sind entsprechend der Anordnung der Öffnungsflächen einzelne Detektoren oder Detektorbereiche eines gemeinsamen Detektors zugeordnet.

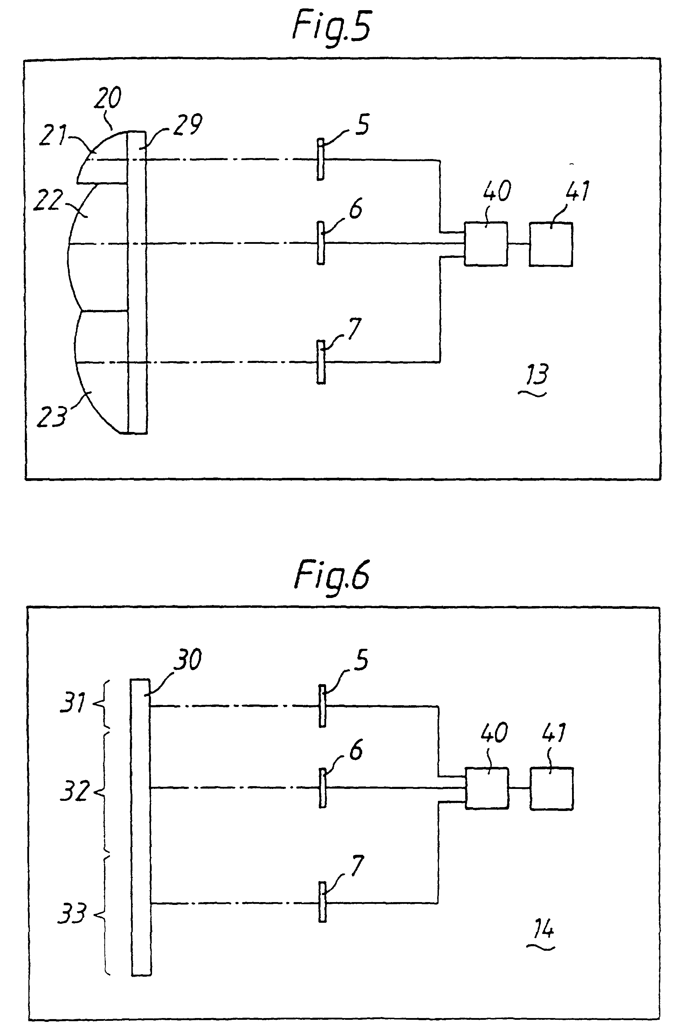

In Fig.5 unterscheidet sich die Abbildungsoptik 20 des Nivelliergeräts 13 von der Abbildungsoptik 20 des Nivelliergeräts 12 aus Fig.3 durch ein zusätzlich angebrachtes diffraktives optisches Element 29. Das diffraktive optische Element 29 korrigiert die von den refraktiven Pupillenzonen 21, 22 und 23 erzeugten Bilder. Es kann aus einer Glasplatte hergestellt sein, auf deren Oberfläche diffraktive Strukturen aufgedampft oder in die Oberfläche eingeätzt sind. Solche Strukturen können auch direkt auf den refraktiven Pupillenzonen 21, 22 und 23 aufgebracht sein.

In Fig.6 besteht die Abbildungsoptik des Nivelliergeräts 14 ausschließlich aus einer diffraktiven Optik 30. Auch die diffraktive Optik 30 ist in unterschiedliche Pupillenzonen 31, 32 und 33 aufgeteilt, die durch Beugung unterschiedliche Schärfentiefebereiche auf die entsprechend zugeordneten Detektoren 5, 6 und 7 abbilden.

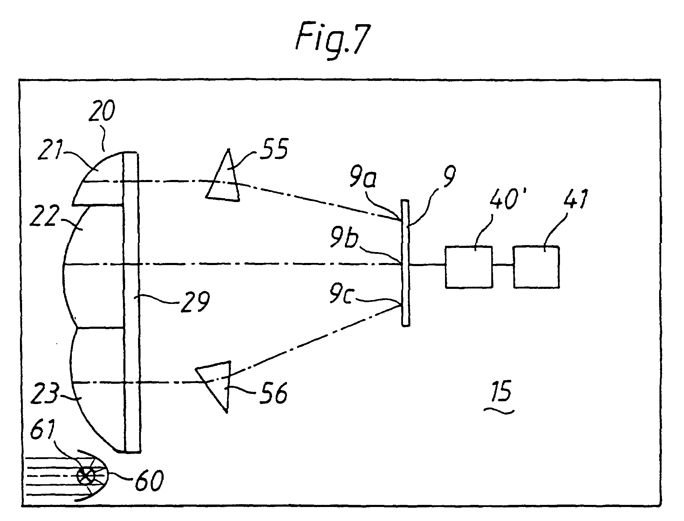

Schließlich ist in Fig.7 eine Abbildungsoptik 20 wie in Fig.5 und ein Detektor 9 wie in Fig.2 dargestellt. Die Teilbereiche 9a, 9b und 9c des Detektors 9 sind hier den unterschiedlich abbildenden Pupillenzonen 21, 22 und 23 zugeordnet. Die Prismen 55 und 56 dienen als Strahlumlenkelemente der Strahlführung zwischen den Pupillenzonen 21, 22 und 23 und den Detektorbereichen 9a, 9b und 9c. Dem Detektor 9 ist eine Elektronik 40' und eine Recheneinheit 41 zu Steuer- und Auswertezwecken nachgeschaltet. Zusätzlich ist ein Scheinwerfer 60 zur Beleuchtung des aufzunehmenden Objekts vorgesehen und im Nivelliergerät 15 integriert Die Lichtquelle 61 des Scheinwerfers 60 kann eine im Infraroten emittierende Laserdiode sein.

## Patentansprüche

1. Vorrichtung für Nivellierzwecke mit einer Abbildungsoptik (1, 2, 3, 4; 20) und einem ortsauflösenden optoelektronischen Detektor (5, 6, 7, 8; 9) zur Bildaufnahme und mit einer Elektronik (40, 40') und einer Recheneinheit (41) zur Steuerung des Detektors (5, 6, 7, 8; 9) und zur Bildauswertung, **dadurch gekennzeichnet,**
**dass** die Abbildungsoptik (1, 2, 3, 4; 20) für die Abbildung aus unterschiedlichen Entfernungsbereichen eine Mehrzahl von unterschiedlich abbildenden Pupillenzonen (1, 2, 3, 4; 21, 22, 23) aufweist und jeder einzelnen Pupillenzone (1, 2, 3, 4; 21, 22, 23) jeweils ein ortsauflösender optoelektronischer Detektor (5, 6, 7, 8) bzw. ein Teilbereich (9a, 9b, 9c) auf einem ortsauflösenden optoelektronischen Detektor (9) zugeordnet ist, so dass die Abbildungsoptik eine simultane Abbildung aus unterschiedlichen Entfernungsbereichen ermöglicht.

2. Vorrichtung nach Anspruch 1, **dadurch gekennzeichnet, daß** die unterschiedlich abbildenden Pupillenzonen (1-4; 21-23) unterschiedlich große, fest eingestellte Brennweiten aufweisen.

3. Vorrichtung nach Anspruch 1 oder 2, **dadurch gekennzeichnet, daß** die unterschiedlich abbildenden Pupillenzonen (1-4; 21-23) unterschiedlich große, fest eingestellte Bildweiten aufweisen.

4. Vorrichtung nach Anspruch 1, **dadurch gekennzeichnet, daß** die unterschiedlich abbildenden Pupillenzonen (1-4; 21-23) gleich große, fest eingestellte Brennweiten, aber unterschiedlich große, fest eingestellte Bildweiten aufweisen.

5. Vorrichtung nach einem der vorherigen Ansprüche, **dadurch gekennzeichnet, daß** die unterschiedlich abbildenden Pupillenzonen (1-4; 21-23) unterschiedlich große Öffnungsflächen (D1, D2, D3, D4; 21,22,23) aufweisen.

6. Vorrichtung nach einem der vorherigen Ansprüche, **dadurch gekennzeichnet, daß** die unterschiedlich abbildenden Pupillenzonen (1-4; 21-23) unterschiedlich geformte Öffnungsflächen (D1, D2, D3, D4; 21,22,23) aufweisen.

7. Vorrichtung nach einem der vorherigen Ansprüche, **dadurch gekennzeichnet, daß** die unterschiedlich abbildenden Pupillenzonen (1-4) durch einzelne, separat angeordnete Aperturen (1-4) dargestellt sind.

8. Vorrichtung nach einem der Ansprüche 1 bis 6, **dadurch gekennzeichnet, daß** die unterschiedlich abbildenden Pupillenzonen (21-23) in einer einzigen Apertur (20) zusammengefaßt sind.

9. Vorrichtung nach einem der vorherigen Ansprüche, **dadurch gekennzeichnet, daß** die unterschiedlich abbildenden Pupillenzonen (1-4; 21-23) durch refraktive (21,22,23) und / oder diffraktive (29; 30) optische Elemente dargestellt sind.

10. Vorrichtung nach einem der vorhergehenden, **dadurch gekennzeichnet, daß** die Zuordnung durch strahlablenkende optische Mittel (51-54) erfolgt.

11. Vorrichtung nach Anspruch 10, **dadurch gekennzeichnet, daß** die strahlablenkenden optischen Mittel durch Prismen (51-54) dargestellt sind.

12. Vorrichtung nach einem der vorherigen Ansprüche, **dadurch gekennzeichnet, daß** ein Scheinwerfer (60) zur Beleuchtung des abzubildenden Objekts integriert ist.

13. Vorrichtung nach Anspruch 12 **dadurch gekennzeichnet, daß** die Lichtquelle (61) des Scheinwerfers (60) eine Laserdiode (61) ist.

## Claims

1. Levelling instrument comprising an imaging optical system (1, 2, 3, 4; 20) and a location-resolving optoelectronic detector (5, 6, 7, 8; 9) for image recording and comprising electronics (40, 40') and a computing unit (41) for controlling the detector (5, 6, 7, 8; 9) and for image evaluation, **characterized in that**, for imaging from different distance ranges, the imaging optical system (1, 2, 3, 4; 20) has a plurality of differently imaging pupil zones (1, 2, 3, 4; 21, 22, 23) and in each case a location-resolving optoelectronic detector (5, 6, 7, 8) or a region (9a, 9b, 9c) on a location-resolving optoelectronic detector (9) is coordinated with each individual pupil zone (1, 2, 3, 4; 21, 22, 23) so that the imaging optical system permits simultaneous imaging from different distance ranges.

2. Instrument according to Claim 1, **characterized in that** the differently imaging pupil zones (1-4; 21-23) have fixed focal distances of different magnitudes.

3. Instrument according to Claim 1 or 2,
**characterized in that** the differently imaging pupil zones (1-4, 21-23) have fixed image distances of different magnitudes.

4. Instrument according to Claim 1, **characterized in that** the differently imaging pupil zones (1-4; 21-23) have fixed focal distances of identical magnitude but fixed image distances of different magnitudes.

5. Instrument according to any of the preceding Claims, **characterized in that** the differently imaging pupil zones (1-4; 21-23) have opening areas (D1, D2, D3, D4; 21, 22, 23) of different magnitudes.

6. Instrument according to any of the preceding Claims, **characterized in that** the differently imaging pupil zones (1-4; 21-23) have differently shaped opening areas (D1, D2, D3, D4; 21, 22, 23).

7. Instrument according to any of the preceding Claims, **characterized in that** the differently imaging pupil zones (1-4) are represented by individual, separately arranged apertures (1-4).

8. Instrument according to any of Claims 1 to 6, **characterized in that** the differently imaging pupil zones (21-23) are combined in a single aperture (20).

9. Instrument according to any of the preceding Claims, **characterized in that** the differently imaging pupil zones (1-4; 21-23) are represented by refractive (21, 22, 23) and/or diffractive (29; 30) optical elements.

10. Instrument according to any of the preceding claims, **characterized in that** the assignment is made by beam-deflecting optical means (51-54).

11. Instrument according to Claim 10, **characterized in that** the beam-deflecting optical means are represented by prisms (51-54).

12. Instrument according to any of the preceding Claims, **characterized in that** a floodlight (60) is integrated for illuminating the object to be imaged.

13. Instrument according to Claim 12, **characterized in that** the light source (61) of the floodlight (60) is a laser diode (61).

## Revendications

1. Dispositif à fonction de niveau, équipé d'une optique de représentation (1,2,3,4;20) et d'un détecteur optoélectronique (5,6,7,8;9) à résolution locale, pour l'enregistrement d'images, et avec un dispositif électronique (40,40') et une unité de calcul (41) pour commander le détecteur (5,6,7,8;9) et pour effectuer l'évaluation des images, **caractérisé en ce que** l'optique de représentation (1,2,3,4;20), prévue pour la représentation à partir de différentes plages d'éloignement, présente une pluralité de zones formant pupilles (1,2,3,4; 21,22,23), donnant une représentation différente et, à chaque zone formant pupille (1,2,3,4; 21,22,23), étant associé un détecteur optoélectronique (5,6,7,8) à résolution locale ou une zone partielle (9a,9b,9c), sur un détecteur optoélectronique (9) à résolution locale, de sorte que l'optique de représentation permet une représentation simultanée à partir de différentes plages d'éloignement.

2. Dispositif selon la revendication 1, **caractérisé en ce que** les zones formant pupille (1 à 4; 21 à 23), donnant une représentation différente, ont des distances focales de valeur différente, réglées à une valeur fixe.

3. Dispositif selon la revendication 1 ou 2, **caractérisé en ce que** les zones formant pupille (1 à 4; 21 à 23), donnant une représentation différente, ont des distances principales de l'image de valeur différente, réglées à une valeur fixe.

4. Dispositif selon la revendication 1, **caractérisé en ce que** les zones formant pupille (1 à 4; 21 à 23), donnant une représentation différente, ont des distances focales identiques, réglées à une valeur fixe, mais ont des distances principales de l'image de valeur différente, réglées à une valeur fixe.

5. Dispositif selon l'une des revendications précédentes, **caractérisé en ce que** les zones formant pupille (1 à 4; 21 à 23), donnant une représentation différente, ont des surfaces d'ouverture (D1,D2,D3,D4;21,22,23) de grandeur différente.

6. Dispositif selon l'une des revendications précédentes, **caractérisé en ce que** les zones formant pupille (1 à 4; 21 à 23), donnant une représentation différente, ont des surfaces d'ouverture (D1,D2,D3,D4;21,22,23) de forme différente.

7. Dispositif selon l'une des revendications précédentes, **caractérisé en ce que** les zones formant pupille (1 à 4), donnant une représentation différente, sont représentées par des ouvertures (1 à 4) individuelles, disposées séparément.

8. Dispositif selon l'une des revendications 1 à 6,
**caractérisé en ce que** les zones formant pupille (21 à 23), donnant une représentation différente, sont regroupées en une ouverture (20) unique.

9. Dispositif selon l'une des revendications précédentes, **caractérisé en ce que** les zones formant pupille (1 à 4; 21 à 23), donnant une représentation différente, sont représentées par des éléments optiques de nature réfractive (21,22,23) et/ou diffractive (29;30).

10. Dispositif selon l'une des revendications précédentes, **caractérisé en ce que** l'association s'effectue à l'aide de moyens optiques (51 à 54) déviant les rayons.

11. Dispositif selon la revendication 10, **caractérisé en ce que** les moyens optiques déviant les rayons sont constitués par des prismes (51 à 54).

12. Dispositif selon l'une des revendications précédentes, **caractérisé en ce qu'**un projecteur de lumière (60) est intégré, afin d'illuminer l'objet à représenter.

13. Dispositif selon la revendication 12, **caractérisé en ce que** la source lumineuse (61) du projecteur (60) est une diode laser (61).
